(19) Europäisches Patentamt
European Patent Office
Office européen des brevets

(11) Veröffentlichungsnummer: **0 177 449**
**B1**

(12) # EUROPÄISCHE PATENTSCHRIFT

(45) Veröffentlichungstag der Patentschrift: **18.01.89**

(51) Int. Cl.[4]: **D 06 P 3/66,** C 09 B 67/24

(21) Anmeldenummer: **85810440.9**

(22) Anmeldetag: **26.09.85**

(54) **Verfahren zum Bedrucken von Cellulosefasern.**

(30) Priorität: **02.10.84 CH 4735/84**

(43) Veröffentlichungstag der Anmeldung: **09.04.86 Patentblatt 86/15**

(45) Bekanntmachung des Hinweises auf die Patenterteilung: **18.01.89 Patentblatt 89/3**

(84) Benannte Vertragsstaaten: **BE CH DE FR GB IT LI**

(56) Entgegenhaltungen:
**EP-A- 0 001 488**
**EP-A- 0 044 463**
**CH-A- 490 468**
**DE-A- 1 925 104**
**DE-A- 2 154 998**
**DE-A- 3 049 170**
**DE-B- 1 159 900**

(73) Patentinhaber: **CIBA-GEIGY AG, Klybeckstrasse 141, CH-4002 Basel (CH)**

(72) Erfinder: **Scheibli, Peter, Dr., Nussbaumweg 3, CH-4103 Bottmingen (CH)**
Erfinder: **Känzig, Alex, Im Rosengarten 32, CH-4106 Therwil (CH)**
Erfinder: **Schaub, Andres, Chiliweg 6, CH-4105 Biel-Benken (CH)**

**EP 0 177 449 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Verfahren zum Bedrucken von Cellulosefasern sind seit langem bekannt; angesichts der immer höheren Echtheitsanforderungen an die in den Druckpasten verwendeten Farbstoffe hat sich die Klasse der Reaktivfarbstoffe durchgesetzt. Beim Druck mit Reaktivfarbstoffen auf Cellulosefasern nutzt man die recht beständige kovalente Bindung der Farbstoffe an die Hydroxygruppen der Faser. Die Bindung der Reaktivfarbstoffe an die Faser (Fixierung) erfolgt im alkalischen Medium. Die Wahl des geeigneten Fixieralkalis hängt dabei vor allem von der Reaktivität der verwendeten Reaktivfarbstoffe ab. Die Fixierung erfolgt in der Regel mit Natriumcarbonat oder Natriumhydrogencarbonat oder mit einer Mischung aus Natriumcarbonat oder Natriumhydrogencarbonat und Harnstoff, um ausreichende Fixiergrade zu erreichen. In der Praxis werden jedoch Verfahren, welche Natriumcarbonat oder Natriumhydrogencarbonat und gegebenenfalls Harnstoff in der Druckpaste enthalten, als nachteilig empfunden, da diese Druckpasten eine geringe Lagerbständigkeit haben. Der pH-Wert der Druckpasten ist für die Lagerbeständigkeit massgebend.

Ferner sind Verfahren zum Bedrucken von cellulosehaltigen Mischfasern, insbesondere Polyester/Cellulose-Mischgewebe, mit Farbstoffmischungen, bestehend aus Dispersions- und Reaktivfarbstoffen, bekannt, die als Fixieralkali Natriumacetat und gegebenenfalls Dicyandiamid oder Harnstoff enthalten. Diese Verfahren werden entwickelt, um mögliche gegenseitige, ungünstige Beeinflussung von Dispersionsfarbstoffen, Dispergatoren und Reaktivfarbstoffen in Gegenwart von Alkalisalzen zu beheben. Als Nachteil dieser Verfahren wird die beschränkte Auswahl an möglichen reaktiven Gruppen der Reaktivfarbstoffe empfunden.

Es bestand ein Bedarf nach neuen Verfahren, welche die genannten Nachteile nicht aufweisen.

Es wurde nun gefunden, dass das weiter unten beschriebene Verfahren diesen Anforderungen genügt.

Gegenstand der vorliegenden Erfindung ist ein Verfahren zum Bedrucken von Cellulosefasern oder cellulosehaltigen Mischfasern mit Reaktivfarbstoffen oder Farbstoffmischungen, welche einen Reaktivfarbstoff enthalten, und anschliessender Fixierung, welche dadurch gekennzeichnet ist, dass man diese Materialien mit einer harnstofffreien Druckpaste bedruckt, enthaltend

a) mindestens einen wasserlöslichen Reaktivfarbstoff der Formel

$$D\text{-}(X)_m \qquad (1),$$

worin D der Rest eines organischen Farbstoffes der Monoazo- oder Polyazo-, Metallkomplexazo-, Anthrachinon-, Phthalocyanin-, Formazan-, Azomethin-, Nitroaryl-, Dioxazin-, Phenazin- oder Stilbenreihe, X ein faserreaktiver Rest der aliphatischen, aromatischen oder heterocyclischen Reihe, der direkt oder über ein Brückenglied an den Rest D gebunden ist, und m = 1, 2, 3, 4, 5 oder 6 ist, und

b) Alkalisalze aliphatischer Carbonsäuren mit 3 bis 18 Kohlenstoffatomen, und den Druck anschliessend fixiert.

Überraschenderweise ist das erfindungsgemässe Verfahren sowohl für reine Cellulosefasern wie auch für cellulosehaltige Mischfasern gleich gut anwendbar, ohne auf bestimmte faserreaktive Gruppen der Reaktivfarbstoffe beschränkt zu sein; überraschend sind ferner die trotz mildem Fixieralkali erzielbaren hohen Fixiergrade. Die in dem erfindungsgemässen Verfahren eingesetzten Druckpasten, die ebenfalls Gegenstand der vorliegenden Erfindung sind, zeigen eine von der Praxis geforderte Lagerbeständigkeit von mehreren Wochen. Überraschend ist ferner, dass auf den Zusatz von Harnstoff vollständig verzichtet werden kann. Für das Bedrucken von Cellulosefasern oder cellulosehaltigen Mischgeweben wirkt sich in dem erfindungsgemässen Verfahren ein Zusatz von Harnstoff in der Druckpaste sogar nachteilig auf den Fixiergrad aus.

Kennzeichen der Erfindung ist, dass man Alkalisalze aliphatischer Carbonsäuren mit 3 bis 18 Kohlenstoffatomen verwendet.

Die in dem erfindungsgemässen Verfahren verwendeten Druckpasten enthalten ferner als Verdickungsmittel die handelsüblichen Verdicker, insbesondere Alginate, wie z.B. Natriumalginat, und Emulsionen bzw. Halbemulsionen. Daneben sind jedoch auch Johannisbrotkernmehläther, Kristallgummi, Stärkeäther, Tragant und Celluloseäther brauchbar; bei den letztgenannten besteht bei einigen Reaktivfarbstoffen die Gefahr, dass diese mit dem Verdickungsmittel reagieren, wodurch die Verdickungsmittel wasserunlöslich werden und somit zu einer Verhärtung der Faser führen können.

Als weitere Zusätze können die Druckpasten für einige Reaktivfarbstoffe Lösungsvermittler, wie z.B. ε-Caprolactam, Thiodiäthylenglykol, Polyäthylenglykol, Pentaerythrit, Acetin (Mischung von Glykolmono-, di- und triacetat) oder Dicyandiamid enthalten.

Weitere allgemein in Druckpasten übliche Zusätze sind m-nitrobenzolsulfonsaures Natrium als Oxydationsmittel, wässrige Formaldehyd-Lösungen sowie Wasser.

Die Menge Fixieralkali, in den verwendeten Druckpasten richtet sich nach Art und Anzahl der faserreaktiven Reste X, die eine oder auch mehrere reaktive Abgangsgruppen und/oder aktivierte Doppelbindungen enthalten. Unter einer reaktiven Abgangsgruppe sind solche Abgangsgruppen zu verstehen, die für die nucleophile Substitution mit den Hydroxylgruppen der Cellulose in Gegenwart von Alkali geeignet sind wie z.B. die Halogenatome der 2,4-Difluor-5-chlor-pyrimidinyl- oder 2-Fluor-4-amino-1,3,5-triazinyl-Reaktivreste. Unter einer aktivierten Doppelbindung ist eine Doppelbindung zu verstehen, die zur Addition der Hydroxylgruppen der Cellulose geeignet ist, wie z.B. in dem Vinylsulfon-Reaktivrest. Reaktivresten, die nach dem nucleophilen Additionsmechanismus

mit der Faser reagieren, ist vielfach eine Eliminierungsstufe vorgelagert, wie z. B. in dem β-Sulfatoäthylsulfonyl- oder dem β-Sulfatoäthylaminosulfonyl-Reaktivrest, der ein Äquivalent Schwefelsäure abspaltet. Diese Reaktivreste benötigen eine entsprechend grössere Menge an Fixieralkali.

Die in dem erfindungsgemässen Verfahren zu verwendende Mindestmenge an Fixieralkali, die äquimolare Menge eines Alkalisalzes einer aliphatischen Carbonsäure, bezieht sich auf den Reaktionsschritt der Farbstoff-Faser-Bindung.

Vorzugsweise werden in dem erfindungsgemässen Verfahren Druckpasten verwendet, welche je faserreaktivem Rest X die zweifache bis fünffache, im besonderen mindestens die dreifache bis fünffache stöchiometrische Menge Fixieralkali enthalten.

Als obere Grenze für das Verhältnis von faserreaktivem Rest zu dem Fixieralkali hat sich die sechsfache stöchiometrische Menge Fixieralkali pro faserreaktivem Rest X als geeignet erwiesen.

Höhere Fixieralkali-Anteile bewirken weder eine noch bessere Lagerbeständigkeit, noch werden die erzielbaren Fixiergrade weiter verbessert.

Als Fixieralkali kommen Alkalisalze aliphatischer Carbonsäuren, wie Lithium-, Kalium- und vor allem Natriumsalze, ungesättigter und vor allem gesättigter, verzweigter oder unverzweigter Mono- oder Dicarbonsäuren, oder Mischungen davon, in Betracht, insbesondere kommen Alkalisalze aliphatischer Carbonsäuren mit 3 bis 8 Kohlenstoffatomen in Betracht.

Vorzugsweise verwendet man in dem erfindungsgemässen Verfahren das Aklalisalz, insbesondere das Natrium- oder Kaliumsalz, einer gesättigten Monocarbonsäure.

Geeignete Alkalisalze aliphatischer Carbonsäuren sind beispielsweise Natrium- oder Kaliumsalze der folgenden Carbonsäuren: Propionsäure, Buttersäure, Isobuttersäure, n-Valeriansäure, Pivalinsäure, Capronsäure, Oenanthsäure, Caprylsäure, Caprinsäure, Laurinsäure, Myristinsäure, Palmitinsäure, Stearinsäure, Acrylsäure, Ölsäure, Elaidinsäure, Linolsäure, Linolensäure, Cyclohexancarbonsäure, Malonsäure, Bernsteinsäure, Glutarsäure, Adipinsäure, Pimelinsäure, Korksäure, Azelainsäure, Sebacinsäure, Maleinsäure, Fumarsäure.

In dem erfindungsgemässen Verfahren verwendet man ganz besonders bevorzugt Natriumpropionat als Fixieralkali.

Gegenstand der Erfindung ist ferner ein Verfahren zum Bedrucken cellulosehaltiger Mischfasern, insbesondere ein Verfahren zum Bedrucken von Polyester/Cellulose-Mischgeweben, welches dadurch gekennzeichnet ist, dass man eine Druckpaste verwendet, welche zusätzlich mindestens einen Dispersionsfarbstoff enthält.

Die Farbstoff-Fixierung auf reinen Cellulosefasern erfolgt nach üblichen Verfahren, wobei Fixierzeit und Fixiertemperatur vom Fasermaterial und der Reaktivität der eingesetzten Reaktivfarbstoffe abhängen. Zur Erzielung einer gleichmässigen und optimalen Farbstoff-Fixierung genügen im allgemeinen Dämpfzeiten im Sattdampf zwischen 5 und 15 min bei 100 bis 105 °C. Durch Hochtemperatur-Dämpfen bzw. Trockenhitze-Dämpfen wird während 20 sek bis 8 min bei 105 bis 190 °C fixiert. Insbesondere werden die Reaktivfarbstoffe mit Dampf bei einer Temperatur von 100 °C bis 150 °C während 30 sek bis 12 min, insbesondere während 2 bis 10 min, fixiert. Auf Mischgeweben wie z. B. Polyester/Cellulose-Mischgeweben werden die Farbstoffmischungen, enthaltend mindestens einen Reaktivfarbstoff und einen Dispersionsfarbstoff, mit Heissluft, Dampf oder überhitztem Dampf bei 100 bis 220 °C fixiert, wobei die Fixierzeit zwischen 10 sek und 10 min bei vorzugsweise 150 °C bis 200 °C liegt.

Die Fertigstellung der Drucke erfolgt durch Spülen in heissem und/oder kaltem Wasser und gegebenenfalls anschliessendem Waschen in Gegenwart eines handelsüblichen Waschmittels, nachfolgendem Spülen in Wasser und Trocknen.

Als Cellulosefasern kommen natürliche Fasern, wie Baumwolle und Leinen (gebleicht), und regenerierte Fasern, wie Viscose, Polynosic und Kupfer-Kunstseiden, in Betracht. Der Druck wird hauptsächlich auf Geweben und Gewirken dieser Fasern vorgenommen.

Als geeignete Dispersionsfarbstoffe kommen z. B. die aus dem Colour Index als Disperse Dyes bekannten Farbstoffe in Betracht.

In dem erfindungsgemässen Verfahren können die Reaktivfarbstoffe der Formel (1) bis zu sechs gleichartige oder verschiedenartige Reaktivreste enthalten.

Vorzugsweise werden in dem erfindungsgemässen Verfahren Druckpasten verwendet, enthaltend wasserlösliche Reaktivfarbstoffe der Formel

$$\left[ D-(X)_m \right] - (SO_3^{\ominus}\ Ka)_n \qquad (2),$$

worin D der Rest eines Monoazo- oder Disazofarbstoffes, eines Metallkomplexazo-, Anthrachinon-, Formazan- oder Dioxazinfarbstoffes, Ka ein Kation und n = 1, 2, 3, 4, 5 oder 6 ist, und X und m die unter Formel (1) angegebenen Bedeutungen haben. Insbesondere ist m = 1 oder 2 und unabhängig davon n = 2, 3 oder 4.

Als wasserlösliche Reaktivfarbstoffe der Formel (1) kommen die unter Formel (1) angegebenen Farbstoffreste D in Betracht, die ein bis sechs, insbesondere bis zwei Reaktivreste X enthalten.

Unter faserreaktiven Resten X sind solche zu verstehen, die mit den Hydroxygruppen der Cellulose, den Amino-, Carboxy-, Hydroxy- und Thiolgruppen bei Wolle und Seide, oder mit den Amino- und eventuell Carboxygruppen von synthetischen Polyamiden unter Bildung kovalenter chemischer Bindungen zu reagieren vermögen.

Vorzugsweise bedeutet X einen faserreaktiven Rest der aliphatischen, aromatischen oder heterocyclischen Reihe, der direkt oder über ein Brückenglied an den Rest D gebunden ist.

Vorzugsweise ist X direkt oder über eine gegebenenfalls monoalkylierte Aminogruppe wie z.B. -NH-, $-N(CH_3)-$, $-N(C_2H_5)-$ oder $-N(C_3H_7)-$ oder über ein eine Aminogruppe enthaltendes Brückenglied an den Rest D gebunden.

Als faserreaktive Reste X in Formel (1) kommen z.B. die folgenden aliphatischen und aromatischen Reste in Betracht:

Vinylsulfonyl-. β-Chloräthylsulfonyl-, β-Sulfatoäthylsulfonyl-, Acetoxy-äthylsulfonyl-, Phosphonooxyäthylsulfonyl-, β-Thiosulfatoäthylsulfonyl, N-Methyl-N-(β-sulfatoäthyl-sulfonyl)-amino, Acryloyl, Mono-, Di- oder Trichloracryloyl wie $-CO-CCl=CH_2$, -CO-CH=CH-Cl, $-CO-CCl=CH-CH_3$; Mono-, Di- oder Tribromacryloyl wie $-CO-CBr=CH_2$, -CO-CH=CH-Br, $-CO-CBr=CH-CH_3$; sowie -CO-CCl=CH-COOH, -CO-CH=CCl-COOH, -CO-CBr=CH-COOH, -CO-CH=CBr-COOH; -CO-CCl=CCl-COOH, -CO-CBr=CBr-COOH; Vorstufen des Acryloyl-Restes und der Derivate des Acryloyl-Restes wie β-Chlor, oder β-Brompropionyl, 3-Phenylsulfonylpropionyl, 3-Methylsulfonylpropionyl, 3-Chlor-3-phenylsulfonylpropionyl, 2,3-Dichlorpropionyl, 2,3-Dibrompropionyl; sowie 2-Fluor-2-chlor-3,3-difluorcyclobutan-1-carbonyl, 2,2,3,3-Tetrafluorcyclobutan-carbonyl-1- oder sulfonyl-1-, β-(2,2,3,3-Tetrafluorcyclobutyl-1)-acryloyl, α- oder β-Alkenyl- oder Arylsulfonyl-acryloyl-Gruppe wie α- oder β-Methylsulfonylacryloyl, Propiolyl, Chloracetyl, Bromacetyl, 4-(β-Chloräthyl-sulfonyl)-butyryl, 4-Vinylsulfonyl-butyryl, 5-(β-Chloräthyl-sulfonyl)-valeryl, 5-Vinylsulfonyl-valeryl, 6-(β-Chloräthyl-sulfonyl)-caproyl, 6-Vinylsulfonyl-caproyl; sowie 4-Fluor-3-nitro-benzol, 4-Fluor-3-nitrophenylsulfonyl, 4-Fluor-3-methylsulfonylbenzoyl, 4-Fluor-3-cyanbenzoyl, 2-Fluor-5-methylsulfonylbenzoyl.

Des weiteren sind faserreaktive Reste X der heterocyclischen Reihe zu nennen, wie z.B. 2,4-Dichlortriazinyl-6-, Mono-, Di- oder Trihalogenpyrimidinylreste, wie 2,4-Dichlorpyrimidinyl-6-, 2,4,5-Trichlorpyrimidinyl-6-, 2,4-Dichlor-5-nitro- oder 5-methyl- oder -5-carboxymethyl- oder -5-carboxy- oder -5-cyano- oder -5-vinyl- oder -5-sulfo- oder -5-mono-, -di- oder trichlormethyl- oder 5-methylsulfonylpyrimidinyl-6-, 2,5-Dichlor-4-methylsulfonyl-pyrimidinyl-6-, 2-Fluor-4-pyrimidinyl-2,6-Difluor-4-pyrimidinyl-, 2,6-difluor-5-chlor-4-pyrimidinyl-, 2-Fluor-5,6-dichlor-4-pyrimidinyl-, 2,6-Difluor-5-methyl-4-pyrimidinyl-, 2,5-Difluor-6-methyl-4-pyrimidinyl-, 2-Fluor-5-methyl-6-chlor-4-pyrimidinyl-, 2-Fluor-5-nitro-6-chlor-4-pyrimidinyl-, 2-Fluor-5-nitro-6-chlor-4-pyrimidinyl-, 5-Brom-2-fluor-4-pyrimidinyl-, 2-fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder 5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 2,6-Difluor-5-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl; 2,4-Bis-methylsulfonyl-pyrimidinyl-4-, 2,5-Bis-methylsulfonyl-5-chlor-pyrimidinyl-4-, 2-Methylsulfonyl-pyrimidinyl-4-, 2-Phenylsulfonyl-pyrimidinyl-4-, 2-Methylsulfonyl-5-chlor-6-methylpyrimidinyl-4-, 2-Methylsulfonyl-5-brom-6-methyl-pyrimidinyl-4-, 2-Methylsulfonyl-5-chlor-6-äthyl-pyrimidinyl-4-, 2-Methylsulfonyl-5-chlor-methyl-pyrimidinyl-4-, 2-Methylsulfonyl-5-nitro-6-methyl-pyrimidinyl-4-, 2,5,6-Tris-methylsulfonyl-pyrimidinyl-4-, 2-Methylsulfonyl-5,6-dimethyl-pyrimidinyl-4-, 2-Äthylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carboxypyrimidinyl-4-, 2-Methylsulfonyl-5-sulfo-pyrimidinyl-4-, 2-Methylsulfonyl-6-carbomethoxy-pyrimidinyl-4-, 2-Methylsulfonyl-5-carboxy-pyrimidinyl-4-, 2-Methylsulfonyl-5-cyan-6-methoxy-pyrimidinyl-4-, 2-Methylsulfonyl-5-chlor-pyrimidinyl-4-, 2-Sulfoäthylsulfonyl-6-methyl-pyrimidinyl-4-, 2-Methylsulfonyl-5-brom-pyrimidinyl-4-, 2-Phenylsulfonyl-5-chlor-pyrimidinyl-4-, 2-Carboxymethylsulfonyl-5-chlor-6-methyl-pyrimidinyl-4-, 2,4-Dichlorpyrimidin-6-carbonyl oder 6-sulfonyl, 2,4-Dichlorpyrimidin-5-carbonyl- oder 5-sulfonyl, 2-Chlor-4-methylpyrimidin-5-carbonyl, 2-Methyl-4-chlorpyrimidin-5-carbonyl, 2-Methylthio-4-fluorpyrimidin-5-carbonyl-, 6-Methyl-2,4-dichlorpyrimidin-5-carbonyl, 2,4,6-Trichlorpyrimidin-5-carbonyl, 2,4-Dichlorpyrimidin-5-sulfonyl, 2,4-Dichlor-6-methyl-pyrimidin-5-carbonyl oder 5-sulfonyl, 2-Methylsulfonyl-6-chlorpyrimidin-4- und 5-carbonyl, 2,6-Bis-(methylsulfonyl)-pyrimidin-4- oder -5-carbonyl, 2-Ethylsulfonyl-6-chlorpyrimidin-5-carbonyl, 2,4-Bis-(methylsulfonyl)-pyrimidin-5-sulfonyl, 2-Methylsulfonyl-4-chlor-6-methyl-pyrimidin-5-sulfonyl- oder -5-carbonyl, 2-Chlorchinoxalin-3-carbonyl, 2- oder 3-Monochlorchinoxalin-6-carbonyl- 2- oder 3-Monochlorchinoxalin-6-sulfonyl, 2,3-Dichlorchinoxalin-5- oder -6-carbonyl, 2,3-Dichlorchonoxalin-5- oder -6-sulfonyl, 1,4-Dichlorphthalazin-6-sulfonyl- oder -6-carbonyl, 2,4-Dichlorchinazolin-7- oder -6-sulfonyl- oder carbonyl, 2,4,6-Trichlorchinazolin-7- oder -8-sulfonyl, 2- oder 3- oder 4-(4′,5′-Dichlorpyridazon-6′-yl-1′)-phenylsulfonyl- oder carbonyl, β-(4′,5′-Dichlorpyridazinon-6′-yl-1′)-propionyl, 3,6-Dichlorpyridazin-4-carbonyl- oder 4-sulfonyl, 2-Chlorbenzthiazol-5- oder -6-carbonyl- oder -5- oder -6-sulfonyl, 2-Arylsulfonyl- oder -Alkylsulfonylbenzthiazhol-5- oder -6-carbonyl- oder -5- oder -6-sulfonyl, wie 2-Methylsulfonyl- oder 2-Ethylsulfonylbenzthiazol-5- oder -6-sulfonyl- oder -carbonyl, 2-Phenylsulfonylbenzthiazol-5- oder -6-sulfonyl- oder carbonyl und

die entsprechenden, im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl, 2-Chlorbenzimidazol-5- oder -6-carbonyl- oder -sulfonyl, 2-Chlor-1-methylbenzimidazol-5- oder -6-carbonyl oder -sulfonyl, 2-Chlor-4-methylthiazol-(1,3)-5-carbonyl) oder -4- oder -5-sulfonyl; ammoniumgruppenhaltige Triazinringe, wie 2-Trimethylammonium-4-phenylamino- oder -4-(o-, m- oder p-sulfophenyl)-amino-triazinyl-6-, 2-(1,1-Dimethylhydrazinium)-4-phenylamino- oder -4-(o-, m- oder p-sulfophenyl)-aminotriazinyl-6-, 2-(2-Isopropyliden-1,1-dimethyl)-hydrazinium-4-phenylamino- oder -4-(o-, m- oder p-sulfophenyl)-aminotriazinyl-6-, 2-N-Aminopyrrolidinium- oder 2-N-Aminopiperidinium-4-phenylamino- oder -4-(o-, m- oder p-sulfophenyl)-aminotriazinyl-6-, ferner 4-Phenylamino- oder 4-(sulfophenylamino)-triazinyl-6-Reste, die in 2-Stellung über eine Stickstoffbindung das 1,4-Bis-aza-bicyclo[2,2,2]-octan oder das 1,2-Bis-aza-bicyclo-[0,3,3]-octan quartär gebunden enthalten, 2-Pyridinium-4-phenylamino- oder -4-(o-, m- oder p-sulfophenyl)-amino-triazinyl-6- sowie entsprechende 2-Oniumtriazinyl-6-Reste, die in 4-Stellung durch Alkylamino-, wie Methylamino, Äthylamino- oder β-Hydroxy-äthylamino-, oder Alkoxy-, wie Methoxy- oder Äthoxy-, oder Aryloxy-, wie Phenoxy-, oder Sulfophenoxy-Gruppen substituiert sind.

Besonders interessante faserreaktive Reste sind Fluor-1,3,5-triazinreste der Formel

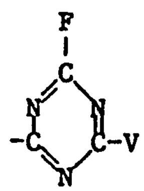

wobei als Substituenten V am Triazinring insbesondere zu nennen sind:

$-NH_2$, Alkylamino-, N,N-Dialkylamino-, Cycloalkylamino-, N,N-Dicycloalkylamino-, Aralkylamino-, Arylaminogruppen, gemischt substituierte Aminogruppen, wie N-Alkyl-N-cyclohexylamino- und N-Alkyl-N-arylaminogruppen, ferner Aminogruppen, die heterocyclische Reste enthalten, welche weitere ankondensierte carbocyclische Ringe aufweisen können, und Aminogruppen, worin das Aminostickstoffatom Glied eines N-heterocyclischen Ringes ist, der gegebenenfalls weitere Heteroatome enthält, sowie Hydrazino und Semicarbazido. Die oben genannten Alkylreste können geradkettig oder verzweigt, niedrigmolekular oder höhermolekular sein, bevorzugt sind Alkylreste mit 1 bis 6 Kohlenstoffatomen; als Cycloalkyl-, Aralkyl- und Arylreste kommen insbesondere Cyclohexyl-, Benzyl-, Phenäthyl-, Phenyl- und Naphthylreste in Frage; heterocyclische Reste sind vor allem Furan-, Thiophen-, Pyrazol-, Pyridin-, Pyrimidin-, Chinolin-, Benzimidazol-, Benzthiazol- und Benzoxazolreste; und als Aminogruppen, worin das Aminostickstoffatom Glied eines N-heterocyclischen Ringes ist, kommen vorzugsweise Reste von sechsgliedrigen N-heterocyclischen Verbindungen in Betracht, die als weitere Heteroatome Stickstoff, Sauerstoff oder Schwefel enthalten können. Die oben genannten Alkyl-, Cycloalkyl-, Aralkyl- und Arylreste, die heterocyclischen Resten sowie die N-heterocyclischen Ringe können weitersubstituiert sein, z. B. durch: Halogen, wie Fluor, Chlor und Brom, Nitro, Cyan, Trifluormethyl, Sulfamoyl, Carbamoyl, $C_{1-4}$-Alkyl, $C_{1-4}$-Alkoxy, Acylaminogruppen, wie Acetylamino oder Benzoylamino, Ureido, Hydroxy, Carboxy, Sulfomethyl oder Sulfo. Als Beispiele für derartige Aminogruppen seien genannt: $-NH_2$, Methylamino, Äthylamino, Propylamino, Isopropylamino, Butylamino, Hexylamino, β-Methoxyäthylamino, γ-Methoxypropylamino, β-Äthoxyäthylamino, N,N-Dimethylamino, N,N-Diäthylamino, β-Chloräthylamino, β-Cyanäthylamino, γ-Cyanpropylamino, β-Carboxyäthylamino, Sulfomethylamino, β-Sulfoäthylamino, β-Hydroxyäthylamino, N,N-Di-β-hydroxyäthylamino, γ-Hydroxypropylamino, Benzylamino, Phenäthylamino, Cyclohexylamino, Phenylamino, Toluidino, Xylidino, Chloranilino, Anisidino, Phenetidino, N-Methyl-N-phenylamino, N-Äthyl-N-phenylamino, N-β-Hydroxyäthyl-N-phenylamino, 2-, 3- oder 4-Sulfoanilino, 2,5-Disulfoanilino, 4-Sulfomethylanilino, N-Sulfomethylanilino, 2-, 3- oder 4-Carboxyphenylamino, 2-Carboxy-5-sulfophenylamino, 2-Carboxy-4-sulfophenylamino, 4-Sulfonaphthyl-(1)-amino, 3,6-Disulfonaphthyl-(1)-amino, 3,6,8-Trisulfonaphthyl-(1)-amino, 4,6,8-Trisulfonaphthyl-(1)-amino, 1-Sulfonaphthyl-(2)-amino, 1,5-Disulfonaphthyl-(2)-amino, 6-Sulfonaphthyl-(2)-amino, Morpholino, Piperidino, Piperazino, Hydrazino und Semicarbazido.

Die Reaktivfarbstoffe der Formel (1) können bis zu sechs gleichartige oder verschiedenartige Reaktivgruppen enthalten.

Vorzugsweise enthalten die Reaktivfarbstoffe der Formel (1) hochreaktive Reste X. Darunter werden solche Reste X verstanden, die reaktiver sind als die 2-Chlor-1,3,5-triazinylreste, die in 4-Stellung durch einen der oben genannten Substituenten V substituiert sind. Als Beispiele solcher hochreaktiven Reste X kommen z. B. in Betracht: 2-Fluor-4-(V)-triazinyl-6-, wobei die oben für V angegebenen Substituenten in Betracht kommen, 2,4-Dichlortriazinyl-6-, 2,4-Dichlorpyrimidin-5-carbonyl-, 5-Cyano- oder 5-Methylsulfonyl-2,4-dichlorpyrimidinyl-6-, Difluorchloropyrimidinyl-, wie 2,4-Difluor-5-chlorpyrimidinyl-6-, 2,3-Dichlorchinoxalin-6-carbonyl-, Vinylsulfonyl-, β-Sulfatoäthylsulfonyl-, β-Chloräthylsulfonyl-, β-Thiosulfatoäthylsulfonyl-, β-Acetoxyäthylsulfonyl-.

Besonders bevorzugt werden in dem erfindungsgemässen Verfahren Druckpasten verwendet, welche mindestens einen Reaktivfarbstoff der Formel (2) enthalten, worin X einen Rest der Formel

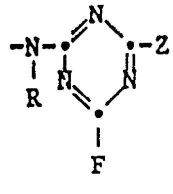 (3)

bedeutet, worin R Wasserstoff oder $C_{1-4}$-Alkyl, wie Methyl, Äthyl, Propyl, Isopropyl, Butyl, sek.-Butyl, Isobutyl oder tert.-Butyl, und Z eine gegebenenfalls substituierte Aminogruppe ist, ein über eine -N(R)-Gruppe gebundenen Difluorchlorpyrimidinylrest oder einen direkt oder über ein aliphatisches Brückenglied gebundenen Vinylsulfonyl-, β-Sulfatoäthylsulfonyl-, β-Thiosulfatoäthylsulfonyl-, β-Chloräthylsulfonyl- oder β-Acetoxyäthylsulfonylrest bedeutet.

Die Reaktivfarbstoffe der Formel (1) leiten sich insbesondere von den folgenden Farbstoffen ab:

1. Monoazoverbindungen der Formel

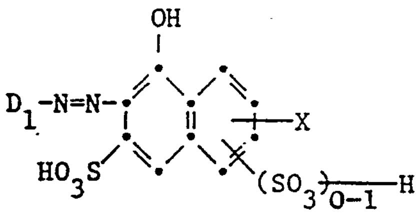

(4),

worin $D_1$ einen Rest der Benzol- oder Naphthalinreihe bedeutet, wie z. B. den Phenyl-, Naphthyl-, Stilben-, Diphenyl-, Benzthiazolylphenyl- oder Diphenylaminrest, der durch Sulfogruppen, Halogen, wie z. B. Chlor, Äthylaminogruppen, wie z. B. Äthylamino oder Benzoylamino, Aminogruppe, wie z. B. $-NH_2$ und Methylamino, Alkoxy, wie z. B. Methoxy, Hydroxy und Carboxy sowie faserreaktive Reste X substituiert sein kann, X vorzugsweise direkt oder über eine Aminogruppe, wie z. B. $-NH_2$ oder $-NHCH_3$, an die 5-, 6-, 7- oder 8-Stellung des Naphthalinkerns gebunden ist und die unter Formel (1) angegebene Bedeutung hat.

2. Disazoverbindungen der Formel (4), worin $D_1$ einen Rest der Azobenzol-, Azonaphthalin- oder Phenylazonaphthalinreihe bedeutet und $D_1$ und der Naphthalinkern, wie in Klasse 1 angegeben, substituiert sein können.

3. Disazoverbindungen der Formel

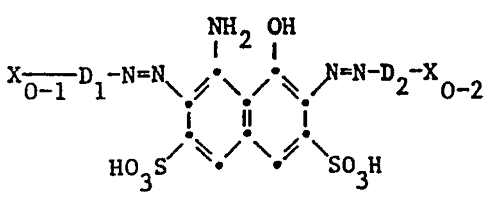

(5)

worin X die unter Formel (1) angegebene Bedeutung hat und $D_1$ und $D_2$ unabhängig voneinander die für $D_1$ unter Formel (4) angegebenen Bedeutungen haben.

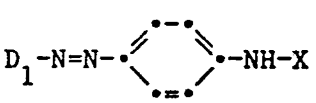

(6),

worin $D_1$ einen unter Formel (4) angegebenen Rest, insbesondere eine Disulfonaphthyl- oder Stilbenrest bedeutet und X die unter Formel (1) angegebene Bedeutung hat und der Benzolkern weitere Substituenten, wie z. B. Halogenatome oder Alkyl-, Alkoxy-, Carbonsäure-, Ureido- und Acylaminogruppen enthalten kann.

5. Mono- oder Disazoverbindungen der Formel

$$X\text{-}D_1\text{-}N{=}N\text{-}K_1 \quad (7),$$

worin $D_1$ einen Rest der Azobenzol-, Azonaphthalin- oder Phenylazonaphthalinreihe oder vorzugsweise einen Rest der Benzol- oder Naphthalinreihe, der durch die für $D_1$ unter Formel (4) angegebenen Substituenten substituiert sein kann, bedeutet und $K_1$ den Rest einer Naphtholsulfonsäure oder den Rest einer Ketomethylenverbindung, wie z. B. ein Acetoacetarylid insbesondere Acetoacetanilid oder ein 5-Pyrazolon, insbesondere ein 1-Phenyl-3-methyl-5-pyrazolon, mit der OH-Gruppe in Nachbarstellung zur Azogruppe bedeutet und X direkt oder über eine Aminogruppe, wie z. B. $-NH_2$, Methylamino oder Benzoylamino an $D_1$ gebunden ist. Vorzugsweise bedeutet $D_1$ einen Rest der Benzolreihe, der eine Sulfonsäuregruppe enthält.

6. Mono- oder Disazoverbindungen der Formel

$$D_1\text{-}N{=}N\text{-}K_2\text{-}X \quad (8),$$

worin $D_1$ einen der für $D_1$ in den Klassen 1 und 2 oben definierten Rest und $K_2$ den Rest einer endolisierbaren Ketomethylenverbindung, wie z. B. ein Acetoacetarylid, insbesondere Acetoacetanilid oder ein 5-Pyrazolon, insbesondere ein 1-Phenyl-3-methyl-5-pyrazolon, mit der OH-Gruppe in Nachbarstellung zur Azogruppe bedeuten und X die in den Klassen 1 bis 4 angegebene Bedeutung hat.

7. Metallkomplexverbindungen, wie z. B. Kupfer-, Chrom- und Kobaltkomplexe, der Farbstoffe der Formeln (4) bis (8), worin $D_1$, $K_1$ und $K_2$ die angegebenen Bedeutungen haben und ferner eine metallisierbare Gruppe, wie z. B. eine Hydroxyl-, Methoxy- oder Carbonsäuregruppe, in Nachbarstellung zur Azogruppe enthalten.

8. Anthrachinonverbindungen, welche den Rest X an einer Alkylamino- oder Arylaminogruppe, die selbst an die α-Stellung des Anthrachinonkerns gebunden ist, enthalten, insbesondere Anthrachinonverbindungen der Formel

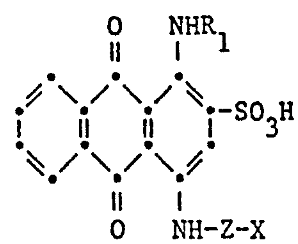

(9),

worin $R_1$ Wasserstoff, Alkyl oder Aryl, insbesondere Phenyl und Z ein Brückenglied bedeutet, welches vorwiegend ein zweiwertiger Rest der Benzolreihe ist, wie z. B. ein Phenylen-, Diphenylen- oder 4,4'-Stilben- oder Azobenzolrest. Vorzugsweise sollte Z eine Sulfonsäuregruppe für jeden vorliegenden Benzolring enthalten. Der Anthrachinonkern kann zusätzlich eine Sulfonsäuregruppe in der 5-, 6-, 7- oder 8-Stellung enthalten. Der Rest

X ist direkt oder über eine Aminogruppe an Z gebunden.

9. Phthalocyaninverbindungen der Formel

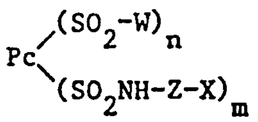
(10),

worin Pc einen Phthalocyaninkern, vorzugsweise Kupferphthalocyanin, W-OH und/oder -$NH_2$, Z ein Brückenglied vorzugsweise eine aliphatische, cycloaliphatische oder aromatische Brücke bedeuten, und n und m jedes 1, 2 oder 3 bedeuten und gleich oder verschieden sein können, vorausgesetzt, dass n+m nicht grösser als 4 ist. Vorzugsweise enthalten die Phthalocyaninverbindungen eine wasserlöslichmachende Gruppe, wie z. B. eine Sulfonsäuregruppe, und eine Gruppe -Z-N(R)-X, worin R Wasserstoff oder Alkyl ist und X die unter Formel (1) angegebene Bedeutung hat.

10. Nitrofarbstoffe der Formel

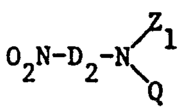
(11),

worin D ein Naphthalinkern oder Benzolkern, welcher weitersubstituiert sein kann, ist, das Stickstoffatom N in o-Stellung zur Nitrogruppe steht, $Z_1$ Wasserstoff oder einen gegebenenfalls substituierten Kohlenwasserstoffrest und Q Wasserstoff oder einen an den Stickstoff durch ein Kohlenstoffatom gebundenen organischen Rest bedeutet, und worin Q und $Z_1$ nicht beide Wasserstoff sind, und Q und $Z_1$ ein Kohlenwasserstoffrest ist, oder an $D_2$ in ortho-Stellung zum Stickstoffatom N unter Bildung eines heterocyclischen Ringes gebunden sein kann, und welche wenigstens einen Rest X insbesondere einen Rest -N(R)-X, worin R Wasserstoff oder Alkyl ist und X die unter Formel (1) angegebene Bedeutung hat, enthalten; insbesondere Nitrofarbstoffe der Formel

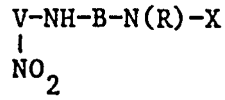
(12),

worin V und B monocyclische Arylkerne bedeuten und die Nitrogruppe in V in o-Stellung zur -NH-Gruppe steht.

11. Metallkomplexe von Formazanfarbstoffen der Formel

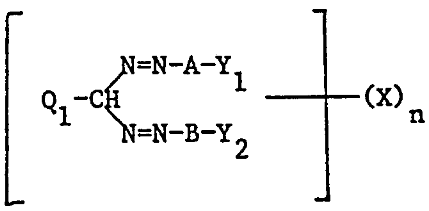
(13),

worin $Q_1$ ein organischer Rest, eine Nitro- oder Cyanogruppe ist, A und B Reste von Diazokomponenten der Benzol-, Naphthalin- oder heterocyclischen Reihe und $Y_1$ und $Y_2$ je einen im o-Stellung zur Azogruppe gebundenen, zur Komplexbildung mit einem Schwermetall befähigten Substituenten bedeuten und X die unter Formel (1) angegebene Bedeutung hat und n = 1 oder 2 ist.

Der Rest $Q_1$ ist vor allem ein Rest der Benzolreihe, wie z. B. Phenyl oder Sulfophenyl, oder ein Alkylrest, wie z. B. Methyl, eine niedrig-molekulare Alkanoylgruppe, wie z. B. Acetyl, eine Carbalkoxygruppe mit bis zu 4 Kohlenstoffatomen, eine Benzoylgruppe oder ein heterocyclischer Rest, und A und B sind vorzugsweise mit Sulfo-, Sulfonamido- oder Alkylsulfonylgruppen substituierte Phenylreste. $Y_1$ und $Y_2$ sind vor allem OH- und COOH-Gruppen. Geeignete Schwermetalle sind Kupfer, Chrom, Kobalt und Nickel.

12. Dioxazine der Formel

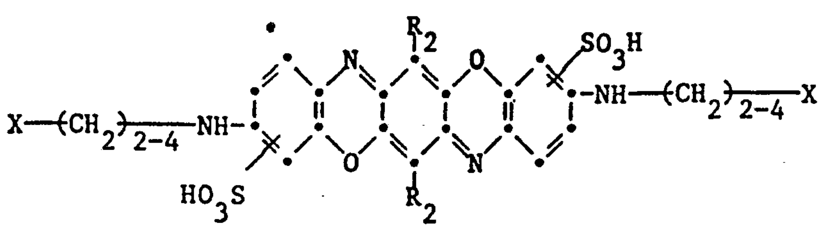
(14),

worin $R_2$ $C_{1-4}$-Alkyl, wie z. B. Methyl, oder Halogen wie z. B. Chlor ist und X die unter Formel (1) angegebene Bedeutung hat.

Ganz besonders bevorzugt werden in dem erfindungsgemässen Verfahren Druckpasten verwendet, welche einen Reaktivfarbstoff der Formel

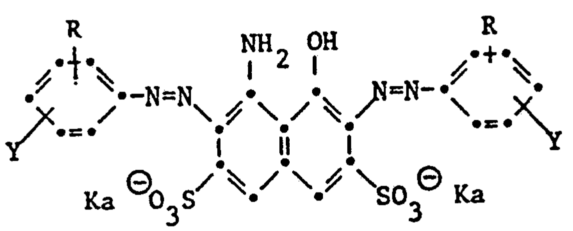
(15),

enthalten, worin eine Y der 2-Fluor-1,3,5-triazinyl-6-aminorest, der in 4-Stellung durch eine gegebenenfalls substituierte Aminogruppe, insbesondere durch die als V bezeichneten Reste substituiert ist, oder der β-Sulfatoäthylsulfonylrest und das andere Y der β-Sulfatoäthylsulfonylrest oder $-SO_3^{\ominus}Ka$, ein R Wasserstoff und das andere R Wasserstoff oder $-SO_3^{\ominus}Ka$ und Ka ein Kation ist, eine Natriumalginatverdickung und je faserreaktiver Abgangsgruppe oder je aktivierter Doppelbindung die mindestens dreifach stöchiometrische Menge Natriumpropionat sowie Wasser und gegebenenfalls Oxydationsmittel enthalten.

Das Kation Ka in den Formeln (2) und (15) bedeutet ein Wasserstoff-, Natrium-, Kalium-, Lithium- oder Ammonium-Ion oder das Kation eines organischen Amins wie z. B. des Triäthanolamins.

Das erfindungsgemässe Verfahren zeichnet sich gegenüber bekannten Verfahren mit Natriumhydrogencarbonat als Fixieralkali durch eine deutlich bessere Lagerbeständigkeit der verwendeten Druckpasten und einen unerwartet hohen erzielbaren Fixiergrad aus.

Gegenstand der Erfindung sind ferner lagerstabile, harnstofffreie Druckpasten, enthaltend

a) mindestens einen wasserlöslichen Reaktivfarbstoff der Formel

$$D\text{-}(X)_m \qquad (1),$$

worin D der Rest eines organischen Farbstoffes der Monoazo- oder Polyazo-, Metallkomplexazo-, Anthrachinon-, Phthalocyanin-, Formazan-, Azomethin-, Nitroaryl-, Dioxazin-, Phenazin- oder Stilbenreihe, X ein faserreaktiver Rest der aliphatischen, aromatischen oder heterocyclischen Reihe, der direkt oder über ein Brückenglied an den Rest D gebunden ist, und m = 1, 2, 3, 4, 5 oder 6 ist, gegebenenfalls einen Dispersionsfarbstoff, und

b) Alkalisalze aliphatischer Carbonsäuren mit 3 bis 18 Kohlenstoffatomen.

Bevorzugt sind Druckpasten, welche einen wasserlöslichen Reaktivfarbstoff der Formel (2) enthalten, insbesondere worin X in Formel (2) die unter Formel (3) angegebenen Bedeutungen hat, und welche die weiter oben genannten bevorzugten Alkalisalze aliphatischer Carbonsäuren und gegebenenfalls einen der angegebenen Lösungsvermittler, insbesondere Dicyandiamid, sowie Alginate oder Emulsionen als Verdickungsmittel enthalten. Bevorzugt sind ferner Druckpasten, die einen Dispersionsfarbstoff und einen Reaktivfarbstoff enthalten.

In der DE-B-1 159 900 und in der DE-A-2 154 998 werden Druckverfahren mit harnstoffhaltigen Druckpasten beschrieben, die jedoch nicht gleich gute Resultate wie das erfindungsgemässe Verfahren mit den erfindungsgemässen Druckpasten aufweisen.

Die nachfolgenden Beispiele dienen der Veranschaulichung der Erfindung. Darin sind die Teile Gewichtsteile und die Prozente Gewichtsprozente. Die Temperaturen sind in Celsiusgraden angegeben. Die Beziehung zwischen Gewichtsteilen und Volumenteilen ist dieselbe wie diejenige zwischen Gramm und Kubikzentimeter.

Beispiel 1

6 Teile des Reaktivfarbstoffes der Formel

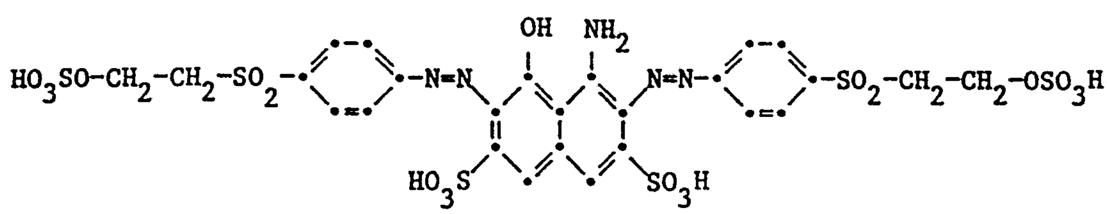

mit einem Wirkstoffgehalt von 62 Prozent werden unter schnellem Rühren in 94 Teile einer Stammverdickung, enthaltend 50 Teile 5%ige Natriumalginat-Verdickung, 39,4 Teile Wasser, 3,5 Teile Natriumpropionat, 1 Teil m-nitrobenzolsulfonsaures Natrium sowie 0,1 Teil 40%ige wässrige Formaldehyd-Lösung, eingestreut. Mit der so erhaltenen Druckpaste bedruckt man ein mercerisiertes Baumwollgewebe, trocknet und dämpft den erhaltenen bedruckten Stoff 8 min bei 103 °C im Sattdampf. Das bedruckte Gewebe wird dann gespült und anschliessend getrocknet. Es wird ein schwarzer Druck erhalten.

Zur Dokumentation der verbesserten Druckpasten-Stabilität und des erzielbaren Fixiergrades zeigt Tabelle 1 die Fixiergrade (berechnet aus den Extinktionen [bei $\lambda_{max}$]) der Extraktionslösung von Gewebeproben der nicht ausgewaschenen Drucke (jeweils fixiert und nicht fixiert), die sich ergeben, wenn man mit der Druckpaste mit Natriumpropionat als Fixieralkali ein mercerisiertes Baumwollgewebe bedruckt (Auftragsmenge: 900 g Paste pro Kilo Substrat), nachdem die Druckpaste die angegebene Zeit bei 42 °C gelagert worden ist; den erhaltenen bedruckten Stoff 2 min bei 120 °C trocknet und 8 min bei 103 °C im Sattdampf dämpft.

Tabelle 1

| Lagerzeit (bei 42 °C) | Fixiergrad |
|---|---|
| sofort eingesetzt | 96% |
| 57 Tage | 94% |
| 105 Tage | 91% |

Verwendet man eine Druckpaste, welche ausser allen Zusätzen wie oben angegeben noch zusätzlich 100 g Harnstoff pro Kilogramm Druckpaste

enthält, so resultieren für Lagerzeit und Fixiergrad bei gleichem Vorgehen die folgenden, in Tabelle 2 angegeben Werte:

Tabelle 2

| Lagerzeit (bei 42 °C) | Fixiergrad |
|---|---|
| sofort eingesetzt | 81% |
| 57 Tage | 54% |

Tabelle 2 dokumentiert die deutliche Verminderung des Fixiergrades durch zusätzliche Verwendung von Harnstoff als Lösungsvermittler.

Vergleichsbeispiel

4 Teile des in Beispiel 1 angegebenen Reaktivfarbstoffes werden unter schnellem Rühren in 96 Teile einer Stammverdickung, enthaltend 50 Teile 5%ige Natriumalginat-Verdickung, 42,4 Teile Wasser, 2,5 Teile Natriumhydrogencarbonat, 1 Teil m-nitrobenzolsulfonsaures Natrium sowie 0,1 Teil 40%ige wässrige Formaldehyd-Lösung eingestreut. Mit der so erhaltenen Druckpaste bedruckt man ein mercerisiertes Baumwollgewebe, trocknet und dämpft den erhaltenen bedruckten Stoff 8 min bei 103 °C im Sattdampf. Das bedruckte Gewebe wird dann gespült und anschliessend getrocknet.

Zur Dokumentation der Druckpasten-Stabilität verfährt man genau wie in Beispiel 1 beschrieben, wobei die in Tabelle 3 dargelegten Fixiergrade resultieren.

Tabelle 3

| Lagerzeit (bei 42 °C) | Fixiergrad Druckpaste B |
|---|---|
| sofort | 91% |
| 1 Tag | 90% |
| 7 Tage | 64% |
| 28 Tage | 50% |
| 56 Tage | 44% |
| 70 Tage | 36% |

Ersetzt man im obigen Beispiel 1 in der Druckpaste die Menge an Natriumpropionat durch 2 Teile Natriumacetat (·3 $H_2O$) und verwendet 10 Teile des angegebenen Reaktivfarbstoffes, so erhält man ein Verhältnis von Fixieralkali zu Reaktivfarbstoff wie in der DE-AS 1 916 627 in Beispiel 3 angegeben. Auf mercerisiertem Baumwollgewebe resultiert nach 8 min Dämpfzeit bei 103 °C im Sattdampf ein Fixiergrad von ca. 20% und nach 20 min Dämpfzeit bei 112 °C und 0,5 atü im Sterndämpfer gemäss Beispiel 3 der DE-AS ein Fixiergrad von ca. 75%. Demgegenüber zeigt die in obigem Beispiel verwendete Druckpaste mit Natriumpropionat einen deutlich höheren Fixiergrad (96%).

Ersetzt man in Beispiel 1 die 6 Teile des dort angegebenen Reaktivfarbstoffes durch 6 Teile eines der nachfolgend angegebenen Reaktivfarbstoffe, so resultieren mit Natriumpropionat als Fixieralkali bei sonst gleicher Verfahrensweise ähnliche Vorteile, wie in Beispiel 1 angegeben:

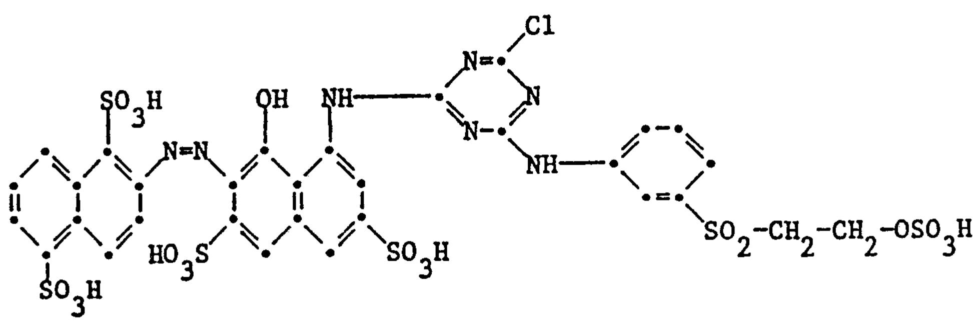

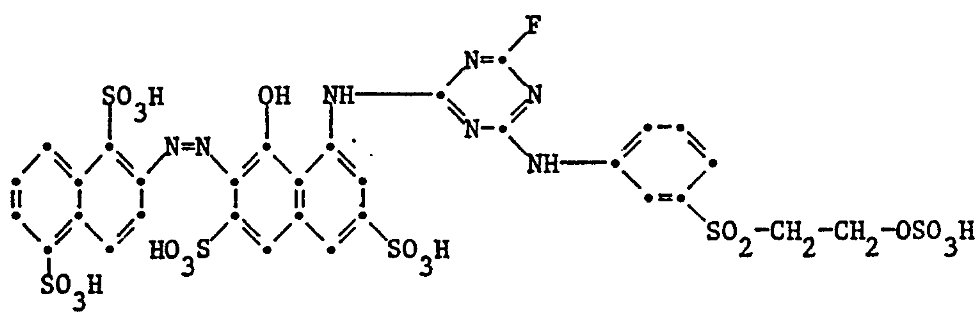

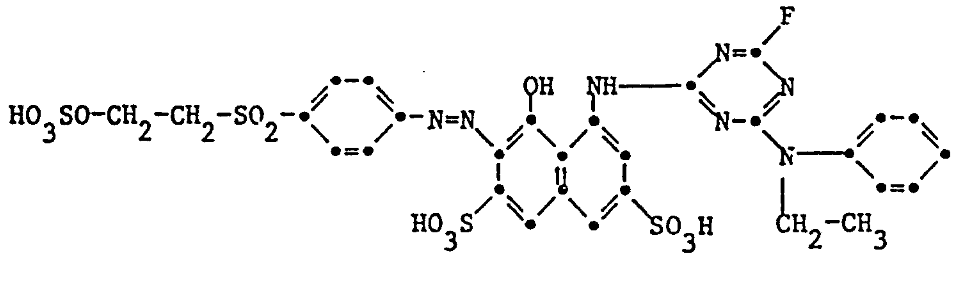

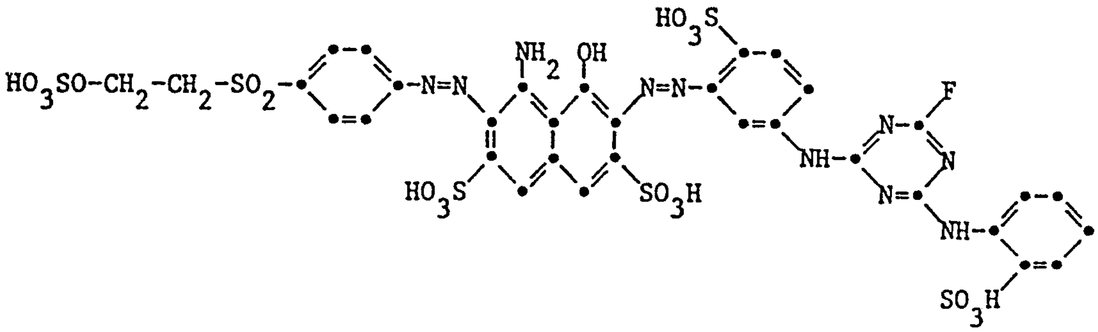

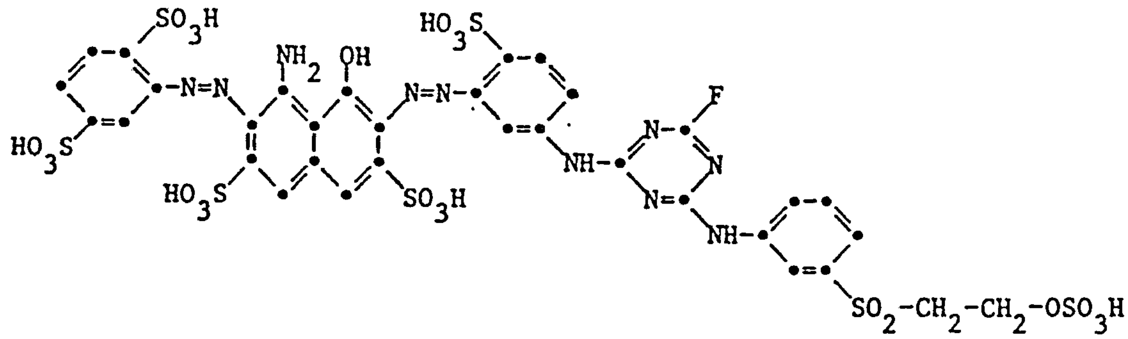

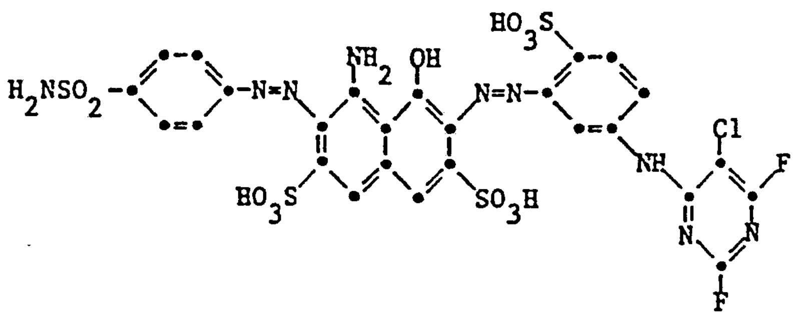

Beispiel 2
Druckpaste A
6 Teile des Reaktivfarbstoffes der Formel

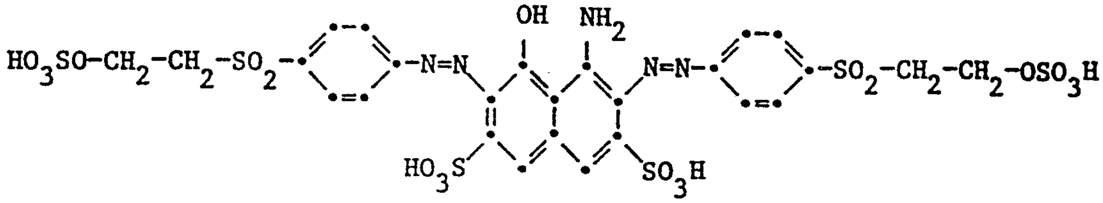

mit einem Wirkstoffgehalt von 62% werden unter schnellem Rühren in 94 Teile einer Stammverdikkung, enthaltend 50 Teile 5%ige Natriumalginat-Verdickung, 38,9 Teile Wasser, 4 Teile Natriumbutyrat, 1 Teil m-nitrobenzolsulfonsaures Natrium sowie 0,1 Teil 40%ige wässrige Formaldehyd-Lösung, eingestreut.

Mit den so erhaltenen Druckpasten bedruckt man ein mercerisiertes Baumwollgewebe, trocknet und dämpft den erhaltenen bedruckten Stoff 8 min bei 103 °C im Sattdampf. Das bedruckte Gewebe wird dann gespült und anschliessend getrocknet. Es wird ein schwarzer Druck erhalten.

Verwendet man anstelle von 4 Teilen Natriumbutyrat 6,5 Teile Natriumcaprylat (Druckpaste B) und als Vergleichsbeispiel 4 Teile Natriumbutyrat und zusätzlich 10 Teile Harnstoff (Druckpaste C), so erhält man ebenfalls schwarze Drucke.

Zur Dokumentation der verbesserten Druckpasten-Stabilität und des erzielbaren Fixiergrades

zeigt Tabelle 4 die Fixiergrade (berechnet aus den Extinktionen [bei $\lambda_{max}$]) der Extraktionslösungen von Gewebeproben der nicht ausgewaschenen Drucke (jeweils fixiert und nicht fixiert), die sich ergeben, wenn man mit der Druckpaste mit dem angegebenen Fixieralkali ein mercerisiertes Baumwollgewebe bedruckt (Auftragsmenge: 900 g Paste pro Kilo Substrat), nachdem die Druckpaste die angegebene Zeit bei 42 °C gelagert worden ist; den erhaltenen bedruckten Stoff 2 min bei 120 °C trocknet und 8 min bei 103 °C im Sattdampf dämpft.

Tabelle 4

| Lagerzeit (bei 42 °C) | Fixiergrad Druckpaste A | Druckpaste B | Druckpaste C |
|---|---|---|---|
| sofort eingesetzt | 97% | 96% | 83% |
| 57 Tage | 95% | 83% | 39% |

Beispiel 3

Druckpaste A

4 Teile des Reaktivfarbstoffes der Formel

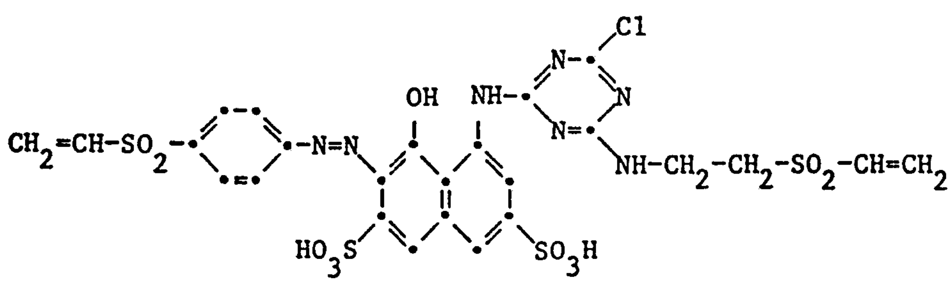

mit einem Wirkstoffgehalt von 70% werden unter schnellem Rühren in 96 Teile einer Stammverdickung, enthaltend 50 Teile 5%ige Natriumalginat-Verdickung, 49,1 Teile Wasser, 3 Teile Natriumpropionat, 1 Teil m-nitrobenzolsulfonsaures Natrium sowie 0,1 Teil 40%ige wässrige Formaldehyd-Lösung, eingestreut.

Druckpaste B

Es werden alle Zusätze wie in der Druckpaste A verwendet, ausser dass man 3 Teile Natriumpropionat durch 5,5 Teile Natriumcaprylat ersetzt und statt 41,9 Teile Wasser 39,4 Teile Wasser zusetzt.

Druckpaste C

Es werden alle Zusätze wie in der Druckpaste A verwendet, ausser dass man 3 Teile Natriumpropionat durch 3 Teile Natriumpropionat und 4 Teile Dicyandiamid ersetzt und statt 41,9 Teile Wasser 37,9 Teile Wasser zusetzt.

Druckpaste D

Es werden alle Zusätze wie in der Druckpaste A verwendet, ausser dass man 3 Teile Natriumpropionat durch 5,5 Teile Natriumcaprylat und 4 Teile Dicyandiamid ersetzt und statt 41,9 Teile Wasser 35,4 Teile Wasser zusetzt.

Mit den so erhaltenen Druckpasten A bis D bedruckt man ein mercerisiertes Baumwollgewebe bzw. Zellwolle, trocknet und dämpft den erhaltenen bedruckten Stoff 8 bzw. 12 min bei 103 °C im Sattdampf. Das bedruckte Gewebe wird dann gespült und anschliessend getrocknet.

Zur Dokumentation des erzielbaren Fixiergrades zeigt Tabelle 5 die Fixiergrade (berechnet aus den Extinktionen [bei $\lambda_{max}$]) der Extraktionslösung von Gewebeproben der nicht ausgewaschenen Drucke (jeweils fixiert und nicht fixiert), die sich ergeben, wenn man mit der Druckpaste mit dem angegebenen Fixieralkali ein mercerisiertes Baumwollgewebe bzw. Zellwolle bedruckt (Auftragsmenge bei Baumwolle: 900 g Paste pro kg Substrat; Auftragsmenge bei Zellwolle: 1000 g Paste pro kg Substrat) den erhaltenen bedruckten Stoff 2 min bei 120 °C trocknet und 8 bzw. 12 min bei 103 °C im Sattdampf dämpft.

Tabelle 5

| Druckpaste | Fixiergrad | | | |
|---|---|---|---|---|
| | auf Baumwolle bei 103 °C Sattdampf während | | auf Zellwolle bei 103 °C Sattdampf während | |
| | 8 Minuten | 12 Minuten | 8 Minuten | 12 Minuten |
| A | 90% | 94% | 58% | 72% |
| B | 91% | 95% | 60% | 72% |
| C | 87% | 90% | 86% | 92% |
| D | 85% | 90% | 82% | 92% |

Die in Tabelle 5 angegebenen Daten beziehen sich alle auf die erfindungsgemässe Verfahrensweise, wodurch hohe Fixiergrade erzielt werden.

Beispiel 4

Druckpaste A

1,5 Teile des in Beispiel 3 angegebenen Reaktivfarbstoffes mit einem Wirkstoffgehalt von 84% werden unter schnellem Rühren in 98,5 Teile einer Stammverdickung eingestreut.

Die 98,5 Teile der Stammverdickung erhält man durch Zusammenmischen und Aufkochen von 23 Teilen einer 5%igen Natriumalginatverdickung, 6,5 Teilen des Kaliumsalzes der Ölsäure, 0,5 Teilen m-nitrobenzolsulfonsaurem Natrium, 0,1 Teilen einer 40%igen, wässrigen Formaldehyd-Lösung und 68,4 Teilen Wasser.

Druckpaste B

Man verfährt wie in der Druckpaste A angegeben, reduziert jedoch die Menge an Wasser zu 63,4 Teilen und die 5%ige Natriumalginatverdikkung zu 18 Teilen und setzt zusätzlich 10 Teile Harnstoff zu.

Mit den so erhaltenen Druckpasten bedruckt man ein mercerisiertes Baumwollgewebe, trocknet und dämpft den erhaltenen bedruckten Stoff 8 bzw. 12 min bei 103 °C im Sattdampf. Das bedruckte Gewebe wird dann gespült und anschliessend getrocknet.

Zur Dokumentation des erzielbaren Fixiergrades verfährt man genau wie in Beispiel 3 beschrieben, wobei die in der folgenden Tabelle 6 angegebenen Fixiergrade resultieren.

Tabelle 6

| Druckpaste | Fixiergrad auf Baumwolle bei 103 °C Sattdampf während 8 min | 12 min |
|---|---|---|
| A | 80% | 84% |
| B | 64% | 64% |

Ein weiteres wertvolles Fixieralkali ist auch das Kaliumsalz der 2,4-Hexadiensäure (Kaliumsorbat), wobei der Fixiergrad bei Zusatz von 100 g/kg Harnstoff stark absinkt.

Beispiel 5

Druckpaste A

2 Teile des Farbstoffes der Formel

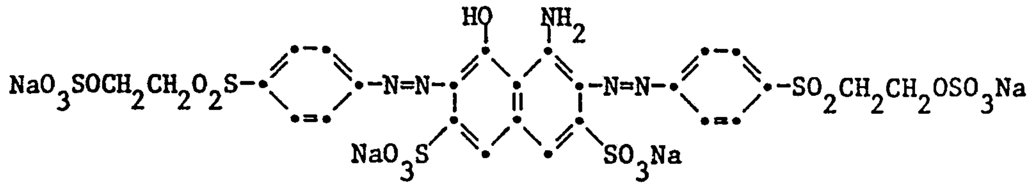

4 Teile einer flüssigen dispergatorarmen Mischung der Farbstoffe der Formeln

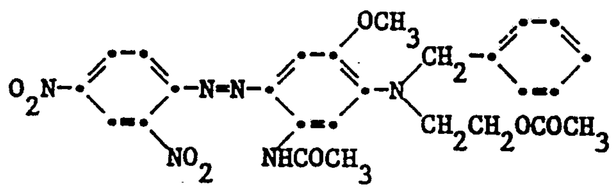

(I) und

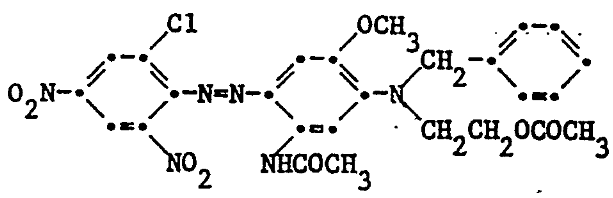

(II)

bestehend aus 25 Gew.-% des Farbstoffes der Formel (I) und 75 Gew.-% des Farbstoffes der Formel (II) werden in 94 Teilen einer Stammverdickung, enthaltend 50 Teile 5%ige Natriumalginat-Verdickung, 3 Teile Na-Propionat, 1 Teil m-nitrobenzolsulfonsaures Natrium und 4 Teile Wasser, unter schnellem Rühren gelöst resp. dispergiert.

Damit wird ein Gewebe, enthaltend 50 Teile gebleichte Baumwolle und 50 Teile Polyester-Stapelgarn, bedruckt. Man trocknet und dämpft den bedruckten Stoff 8 min bei 170 °C ohne Überdruck. Anschliessend wird der fixierte Druck kalt und heiss gewaschen und getrocknet. Ein schwarzer, egaler Druck wird erhalten.

Druckpaste B

Man verfährt wie unter Druckpaste A angegeben, verwendet jedoch anstelle von 3 Teilen Natriumpropionat 2 Teile Natriumcarbonat und anstelle von 4 Teilen Wasser 5 Teile Wasser.

Mit der Druckpaste B resultieren Drucke, die im Vergleich zu den Drucken mit der Druckpaste A eine geringere optische Farbstärke zeigen. Dies zeigt sich auch in den Fixiergraden des Reaktivfarbstoffes auf dem Baumwollanteil des Mischgewebes (Tabelle 7).

Tabelle 7

| | Fixiergrad des Reaktivfarbstoffes auf dem Baumwollanteil |
|---|---|
| Druckpaste A | 90% |
| Druckpaste B | 83% |

Verwendet man in dem obigen Beispiel anstelle des dort angegebenen Reaktivfarbstoffes 2 Teile des Reaktivfarbstoffes der Formel

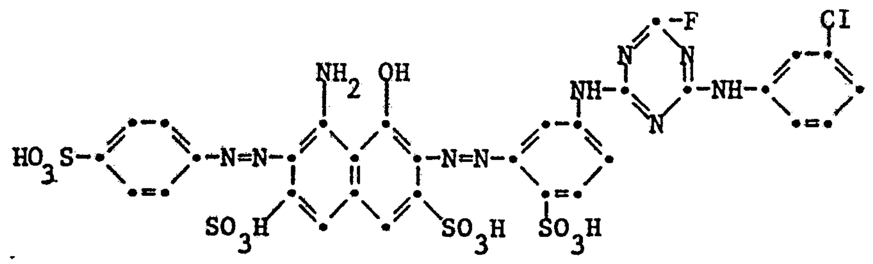

bei sonst gleicher Verfahrensweise, so erhält man nach längerer Lagerzeit der Druckpasten mit der Druckpaste A einen höheren Fixiergrad des Reaktivfarbstoffes auf dem Baumwollanteil als mit der Druckpaste B.

Beispiel 6

Druckpaste A

4 Teile des Reaktivfarbstoffes der Formel

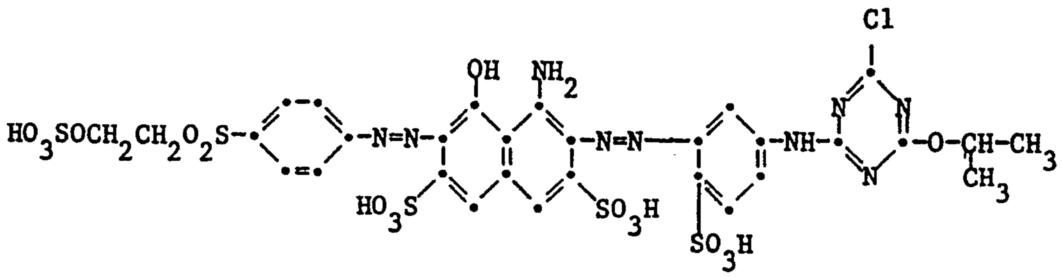

werden unter schnellem Rühren in 96 Teilen einer Stammverdickung, enthaltend 3 Teile Na-Propionat, 1 Teil m-nitrobenzolsulfosaures Natrium und 92 Teile 5,5%ige Lösung eines niedrigviscosen Na-Alginats, eingearbeitet.

Mit dieser Druckpaste wird ein mercerisiertes Baumwollgewebe bedruckt, getrocknet und fixiert während 3 min bei 102 °C in annähernd gesättigtem Wasserdampf. Nach dem üblichen Waschen resultiert eine Marine-Nuance von hoher Farbtiefe, die auch erreicht wird, wenn die Druckpaste vorgängig während 14 Tagen bei 40 °C gelagert wird.

Druckpaste B

Man verfährt wie unter Druckpaste A angegeben, verwendet jedoch anstelle von 3 Teilen Natriumpropionat 2 Teile Natriumbicarbonat und anstelle von 92 Teilen der 5,5%igen Lösung Na-Alginat 93 Teile der 5,5%igen Lösung Na-Alginat.

Mit der Druckpaste B resultieren Drucke, die im Vergleich zu den mit der Druckpaste A erhaltenen Drucken nach einer Lagerzeit von 14 Tagen bei 40 °C eine deutlich geringere Farbtiefe aufweisen. Dies zeigt sich auch in den in Tabelle 8 angegebenen Fixiergraden.

Tabelle 8

| | Fixiergrad auf Baumwolle Druckpaste sofort gedruckt | Druckpaste nach 14 Tagen gedruckt |
|---|---|---|
| Druckpaste A | 92% | 92% |
| Druckpaste B | 94% | 58% |

**Patentansprüche**

1. Verfahren zum Bedrucken von Cellulosefasern oder cellulosehaltigen Mischfasern mit Reaktivfarbstoffen oder Farbstoffmischungen, welche einen Reaktivfarbstoff enthalten, und anschliessender Fixierung, dadurch gekennzeichnet, dass man diese Materialien mit einer harnstofffreien Druckpaste bedruckt, enthaltend

a) mindestens einen wasserlöslichen Reaktivfarbstoff der Formel

$$D\text{-}(X)_m \qquad (1),$$

worin D der Rest eines organischen Farbstoffes der Monoazo- oder Polyazo-, Metallkomplexazo-, Anthrachinon-, Phthalocyanin-, Formazan-, Azomethin-, Nitroaryl-, Dioxazin-, Phenazin- oder Stilbenreihe, X ein faserreaktiver Rest der aliphatischen, aromatischen oder heterocyclischen Reihe, der direkt oder über ein Brückenglied an den Rest D gebunden ist, und m = 1, 2, 3, 4, 5 oder 6 ist, und

b) Alkalisalze aliphatischer Carbonsäuren mit 3 bis 18 Kohlenstoffatomen, und den Druck anschliessend fixiert.

2. Verfahren gemäss Anspruch 1, dadurch gekennzeichnet, dass man mindestens einen wasserlöslichen Reaktivfarbstoff der Formel

$$\left[D\text{-}(X)_m\right]\text{-}(SO_3^{\ominus}\ Ka)_n \qquad (2)$$

verwendet, worin D der Rest eines Monoazo- oder Disazofarbstoffes, eines Metallkomplexazo-, Anthrachinon-, Formazan- oder Dioxazinfarbstoffes, Ka ein Kation und n = 1, 2, 3, 4, 5 oder 6 ist, und X und m die in Anspruch 1 angegebenen Bedeutungen haben.

3. Verfahren gemäss Anspruch 2, dadurch gekennzeichnet, dass man mindestens einen wasserlöslichen Reaktivfarbstoff der Formel (2) verwendet, worin X einen Rest der Formel

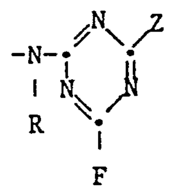 (3)

bedeutet, worin R Wasserstoff oder $C_{1-4}$-Alkyle und Z eine gegebenenfalls substituierte Aminogruppe ist, einen über eine -N(R)-Gruppe gebundenen Difluorchlorpyrimidinylrest oder einen direkt oder über ein aliphatisches Brückenglied gebundenen Vinylsulfonyl-, β-Sulfatoäthylsulfonyl-, β-Thiosulfatoäthylsulfonyl-, β-Chloräthylsulfonyl- oder β-Acetoxyäthylsulfonylrest bedeutet.

4. Verfahren gemäss Anspruch 1, dadurch gekennzeichnet, dass man als Alkalisalze aliphatischer Carbonsäuren Alkalisalze gesättigter oder ungesättigter, verzweigter oder unverzweigter Mono- oder Dicarbonsäuren oder Mischungen davon, verwendet.

5. Verfahren gemäss Anspruch 4, dadurch gekennzeichnet, dass man Alkalisalze aliphatischer Carbonsäuren mit 3 bis 3 Kohlenstoffatomen verwendet.

6. Verfahren gemäss Anspruch 5, dadurch gekennzeichnet, dass man das Alkalisalz, insbesondere das Natrium- oder Kaliumsalz, einer gesättigten Monocarbonsäure verwendet.

7. Verfahren gemäss Anspruch 6, dadurch gekennzeichnet, dass man Natriumpropionat verwendet.

8. Verfahren gemäss Anspruch 1, dadurch gekennzeichnet, dass man Druckpasten verwendet, welche Lösungsvermittler für Reaktivfarbstoffe enthalten.

9. Verfahren gemäss Anspruch 8, dadurch gekennzeichnet, dass man als Lösungsvermittler ε-Caprolactam, Thiodiäthylenglykol, Polyäthylenglykol, Pentaerythrit, Acetin und insbesondere Dicyandiamid verwendet.

10. Verfahren gemäss Anspruch 1, dadurch gekennzeichnet, dass man Druckpasten verwendet, welche als Verdickungsmittel Alginate oder Emulsionen enthalten.

11. Verfahren gemäss Anspruch 1, dadurch gekennzeichnet, dass man Druckpasten verwendet, welche pro faserreaktivem Rest X mindestens die einfache stöchiometrische Menge, vorzugsweise die zwei- bis fünffache stöchiometrische Menge, des Salzes einer aliphatischen Carbonsäure enthalten.

12. Verfahren gemäss Anspruch 1, dadurch gekennzeichnet, dass man zum Bedrucken von Polyester/Cellulose-Mischgeweben eine Druckpaste verwendet, welche zusätzlich mindestens einen Dispersionsfarbstoff enthält.

13. Verfahren gemäss Anspruch 1, dadurch gekennzeichnet, dass man reine Cellulosefasern bedruckt und die Reaktivfarbstoffe mit Dampf bei einer Temperatur von 100 °C bis 150 °C während 30 sek bis 12 min fixiert.

14. Verfahren gemäss Anspruch 12, dadurch gekennzeichnet, dass man Polyester/Cellulose-Mischgewebe bedruckt und die Farbstoffe mit Heissluft, Dampf oder überhitztem Dampf bei 100 °C bis 200 °C fixiert.

15. Lagerstabile, harnstofffreie Druckpasten, enthaltend

a) mindestens einen wasserlöslichen Reaktivfarbstoff der Formel

$$D\text{-}(X)_m \qquad (1),$$

worin D der Rest eines organischen Farbstoffes der Monoazo- oder Polyazo-, Metallkomplexazo-, Anthrachinon-, Phthalocyanin-, Formazan-, Azomethin-, Nitroaryl-, Dioxazin-, Phenazin- oder Stilbenreihe, X ein faserreaktiver Rest der aliphatischen, aromatischen oder heterocyclischen Reihe, der direkt oder über ein Brückenglied an den Rest D gebunden ist und m = 1, 2, 3, 4, 5 oder 6 ist, gegebenenfalls einen Dispersionsfarbstoff, und

b) Alkalisalze aliphatischer Carbonsäuren mit 3 bis 18 Kohlenstoffatomen.

## Claims

1. A process for printing cellulosic fibres or cellulose-containing blend fibres with reactive dyes or dye mixture which contain a reactive dye and subsequent fixation, which comprises printing these materials with a urea-free print paste containing

a) at least one water-soluble reactive dye of the formula

$$D\text{-}(X)_m \qquad (1),$$

in which D is the radical of an organic dye of the monoazo, polyazo, metal complex azo, anthraquinone, phthalocyanine, formazan, azomethine, nitroaryl, dioxazine, phenazine or stilbene series, X is a fibre-reactive radical of the aliphatic, aromatic or heterocyclic series which is bonded to the radical D either directly or via a bridge member and m is 1, 2, 3, 4, 5 or 6, and

b) alkali metal salts of aliphatic carboxyclic acids having 3 to 18 carbon atoms, and subsequently fixing the print.

2. A process according toclaim 1, wherein at least one water-soluble reactive dye of the formula

$$\left[ D\text{-}(X)_m \right] \text{—} (SO_3^{\ominus}\ Ka)_n \qquad (2),$$

in which D is the radical of a monoazo or disazo dye or a metal complex azo, anthraquinone, formazan or dioxazine dye, Ka is a cation and n is 1, 2, 3, 4, 5 or 6, and X and m are as defined in claim 1, is used.

3. A process according to claim 2, wherein use is made of at least one water-soluble reactive dye of the formula (2) in which X is a radical of the formula

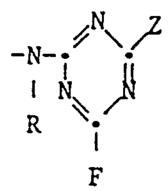 (3)

in which R is hydrogen or $C_{1-4}$-alkyl and Z is a substituted or unsubstituted amino group, a difluorochloropyrimidinyl radical which is bonded via an -N(R)- group or a vinylsulfonyl, β-sulfatoethylsulfonyl, β-thiosulfatoethylsulfonyl, β-chlorethylsulfonyl or β-acetoxyethylsulfonyl radical which is bonded directly or via an aliphatic bridge member.

4. A process according to claim 1, wherein the alkali metal salts of aliphatic carboxylic acids used are alkali metal salts of saturated or unsaturated, branhed or unbranched monocarboxyclic or dicarboxyclic acids or mixtures thereof.

5. A process according to claim 4, wherein alkali metal salts of aliphatic carboxylic acids having 3 to 8 carbon atoms are used.

6. A process according to claim 5, wherein the alkali metal salt, in particular the sodium or potassium salt, of a saturated monocarboxyclic acid is used.

7. A process according to claim 6, wherein sodium propionate is used.

8. A process according to claim 1, wherein the print pastes used contain solubilisers for reactive dyes.

9. A process according to claim 8, wherein the solubilisers used are ε-caprolactam, thiodiethylene glycol, polyethylene glycol, pentaerythritol, acetin and in particular dicyanodiamide.

10. A process according toclaim 1, wherein the print pastes used contain, as thickening agents, alginates or emlusions.

11. A process according to claim 1, wherein the print pastes used contain per fibre-reactive radical X at least one time the stoichiometric amount, preferably twice to five times the stoichiometric amount, of the salt of an aliphatic carboxylic acid.

12. A process according to claim 1, wherein the print paste used for printing polyester/cellulose blend fabrics additionally contains at least one disperse dye.

13. A process according to claim 1, wherein pure cellulosic fibres are printed and the reactive dyes are fixed at a temperature of 100 °C to 150 °C with steam in the course of 30 seconds to 12 min.

14. A process according to claim 12, wherein polyester/cellulose blend fabric is printed and the dyes are fixed at 100 °C to 220 °C with hot air, steam or superheated steam.

15. A long-shelflife urea-free print paste containing

a) at least one water-soluble reactive dye of the formula

$$D\text{-}(X)_m \qquad (1),$$

in which D is the radical of an organic dye of the monoazo, polyazo, metal complex azo, anthraquinone, phthalocyanine, formazan, azomethine, nitroaryl, dioxazine, phenazine or stilbene series, X is a fibre-reactive radical of the aliphatic, aromatic or heterocyclic series which is bonded to the radical D either directly or via a bridge member and m is 1, 2, 3, 4, 5 or 6, if desired a disperse dye and

b) alkali metal salts of aliphatic carboxylic acids having 3 to 18 carbon atoms.

**Revendications**

1. Procédé pour l'impression de fibres cellulosiques ou de fibres mélangées contenant de la cellulose à l'aide de colorants réactifs ou de mélanges de colorants contenant un colorant réactif, avec fixation subséquent, caractérisé en ce que l'on imprime ces matières à l'aide d'une pâte d'impression exempte d'urée, contenant:

a) au moins un colorant réactif hydrosoluble, de formule

$$D\text{-}(X)_m \qquad (1),$$

dans laquelle D représente le radical d'un colorant organique des classes de colorants monoazoïques ou polyazoïques, des colorants azoïques à complexe métallique, des colorants d'anthraquinone, de phtalocyanine, de formazan, d'azométhine, des colorants nitroaryliques, des colorants de dioxazine, de phénazine ou des colorants stilbéniques, X représente un radical aliphatique, aromatique ou hétérocyclique, réactif avec les fibres, relié au radical D directement ou par l'intermédiaire d'un chaînon pontant, et m est égal à 1, 2, 3, 4, 5 ou 6, et

b) des sels alcalins d'acides carboxycliques aliphatiques comportant de 3 à 18 atomes de carbone, puis on fixe l'impression.

2. Procédé selon la revendication 1, caractérisé en ce que l'on utilise au moins un colorant réactif hydrosoluble, de formule

$$\left[ D\text{-}(X)_m \right] \text{---} (SO_3^{\ominus}\ Ka)_n \qquad (2),$$

dans laquelle D est le radical d'un colorant monoazoïque ou disazoïque, d'un colorant azoïque à complexe métallique, d'un colorant d'anthraquinone, de formazan ou de dioxazine, Ka représente un cation et n est égal à 1, 2, 3, 4, 5 ou 6, X et m ayant les significations indiquées dans la revendication 1.

3. Procédé selon la revendication 2, caractérisé en ce que l'on utilise au moins un colorant réactif hydrosoluble de formule (2) dans laquelle X représente un groupe de formule

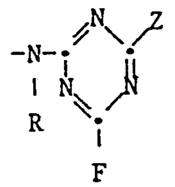

(3),

dans laquelle R représente un hydrogène ou un groupe alkyle en $C_1$–$C_4$ et Z représente un groupe amino éventuellement substitué un groupe difluorochloropyrimidinyle relié par l'intermédiaire d'un groupe -N(R)-, ou un groupe vinylsulfonyle, bêta-sulfatoéthylsulfonyle, bêta-thiosulfatoéthylsulfonyle, bêta-chloréthylsulfonyle ou bêta-acétoxyéthylsulfonyle, relié directement ou par l'intermédiaire d'un chaînon pontant aliphatique.

4. Procédé selon la revendication 1, caractérisé en ce que l'on utilise, en tant que les alcalins d'acides carboxyliques aliphatiques, des sels alcalins d'acides mono- ou di-carboxyliques saturés ou insaturés, ramifiés ou non ramifiés, ou leurs mélanges.

5. Procédé selon la revendication 4, caractérisé en ce que l'on utilise des sels alcalins d'acides carboxyliques aliphatiques comportant de 3 à 8 atomes de carbone.

6. Procédé selon la revendication 5, caractérisé en ce que l'on utilise un sel alcalin, en particulier le sel de sodium ou de potassium, d'un acide monocarboxylique saturé.

7. Procédé selon la revendication 6, caractérisé en ce que l'on utilise le propionate de sodium.

8. Procédé selon la revendication 1, caractérisé en ce que l'on utilise des pâtes d'impression contenant des agents solubilisants pour les colorants réactifs.

9. Procédé selon la revendication 8, caractérisé en ce que l'on utilise, en tant qu'agents solubilisants, l'epsilon-caprolactame, le thiodiéthylène-glycol, un polyéthylène-glycol, le pentaérythritol, l'acétine et plus spécialement le dicyanodiamide.

10. Procédé selon la revendication 1, caractérisé en ce que l'on utilise des pâtes d'impression contenant, en tant qu'agents épaississants, des alginates ou des émulsions.

11. Procédé selon la revendication 1, caractérisé en ce que l'on utilise des pâtes d'impression qui, pour un groupe réactif avec les fibres X, contiennent au moins 1 fois la quantité stoechiométrique, et de préférence de 2 à 5 fois la quantité stoechiométrique, du sel d'un acide carboxylique aliphatique.

12. Procédé selon la revendication 1, caractérisé en ce que, pour l'impression de tissus mélangés polyester/cellulose, on utilise un pâte d'impression qui contient en outre au moins un colorant dispersé.

13. Procédé selon la revendication 1, caractérisé en ce que l'on imprime des fibres de cellulose pure et on fixe les colorants réactifs à la vapeur, à une température de 100 à 150 °C, pendant 30 s à 12 mn.

14. Procédé selon la revendication 12, caractérisé en ce que l'on imprime des tissus mélangés polyester/cellulose et en ce que l'on fixe les colorants à l'air chaud, à la vapeur ou à la vapeur surchauffée, à des températures de 100 à 220 °C.

15. Pâtes d'impression exemptes d'urée, stables à la conservation, contenant:

a) au moins un colorant réactif hydrosoluble de formule

$$D\text{-}(X)_m \qquad (1),$$

dans laquelle D est le radical d'un colorant organique des classes des colorants monoazoïques ou polyazoïques, des colorants azoïques à complexe métallique des colorants d'anthraquinone, de phtalocyanine, de formazan, d'azométhine, des colorants nitro-aryliques, des colorants de dioxazine, des colorants de phénazine ou des colorants stilbéniques.

X represente un groupe réactif avec les fibres, de nature aliphatique, aromatique ou hétérocyclique, relié au radical D directement ou par l'intermédiaire d'un chaînon pontant, et m est égal à 1, 2, 3, 4, 5 ou 6, le cas échéant un colorant dispersé et

b) des sels alcalins d'acides carboxyliques aliphatiques comportant de 3 à 18 atomes de carbone.